# EUROPÄISCHE PATENTANMELDUNG

(11) **EP 4 462 640 A1**
(43) Veröffentlichungstag der Anmeldung: **13.11.2024**
(21) Anmeldenummer: 23173125.8
(22) Anmeldetag: 12.05.2023
(51) Int. Cl.: H02J 13/00, H02J 3/00

(54) **COMPUTERIMPLEMENTIERTES VERFAHREN, ANORDNUNG UND COMPUTERPROGRAMMPRODUKT ZUR ANALYSE VON NETZWERKINFORMATIONEN EINES ELEKTRISCHEN ENERGIEVERSORGUNGSNETZ MITTELS SERILISATION/DESERILISATION**

(71) Anmelder: Siemens Aktiengesellschaft, 80333 München (DE)
(72) Erfinder: Heuer, Christian, 21220 Seevetal (DE); Metzger, Michael, 85570 Markt Schwaben (DE); Stursberg, Paul, 80469 München (DE); Tomaselli, Domenico, 81673 München (DE)
(74) Vertreter: Siemens Patent Attorneys

(57) **Zusammenfassung**

Gegenstand der vorliegenden Erfindung ist ein computerimplementiertes Verfahren für eine Analyse von Netzwerkinformationen eines elektrischen Energieversorgungsnetzes (2,3,4,5,6,7),
mit den Schritten:
Empfangen von serialisierten Netzwerkinformationen in einem ersten anwendungsspezifischen Datenformat mittels einer Kommunikationseinrichtung (12), wobei die serialisierten Netzwerkinformationen Informationen über Systemkomponenten aufweisen,
Deserialisieren der serialisierten Netzwerkinformationen mittels einer Deserialisierungseinrichtung (19), und
Zuordnen von Komponententypen anhand der Informationen über Systemkomponenten mittels einer ersten Zuordnungseinrichtung, und
Zuordnen von Komponenteneigenschaften anhand der Informationen über Systemkomponenten mittels einer zweiten Zuordnungseinrichtung (21), und
Bereitstellen einer Netzwerktopologie (23,58), die als Graph Typen und Eigenschaften der Systemkomponenten beinhaltet, in einem zweiten anwendungsspezifischen Datenformat mittels einer Topologieausgabeeinrichtung (22). Ferner sind Gegenstände der Erfindung eine entsprechende Anordnung und ein entsprechendes Computerprogrammprodukt.

## Beschreibung

Die Erfindung betrifft ein computerimplementiertes Verfahren für eine Analyse von Netzwerkinformationen eines elektrischen Niederspannungsnetzes und/oder eines elektrischen Mittelspannungsnetzes gemäß dem Oberbegriff des Anspruchs 1, eine Anordnung gemäß dem Oberbegriff des Anspruchs 8 und ein Computerprogrammprodukt gemäß Anspruch 15.

Aus der Produktbroschüre "Intelligent control center technology - Spectrum Power", Siemens AG 2017, Article-No. EMDG-B90019-00-7600, ist eine Software für ein sog. "Supervisory Control and Data Acquisition (SCADA)" System, also eine Leitstelle, bekannt. SCADA Systeme sind zur Kontrolle und Steuerung von Energienetzen lange bekannt (Wikipedia permananter link: https://en.wikipedia.org/w/index.php?title=SCADA&oldid=858433 181). Dabei werden Messwerte von Sensoren, beispielsweise von Spannungsmessgeräten und Strommessgeräten im Energienetz, aggregiert und zur Leitstelle übermittelt. Zur Steuerung von Leistungsschaltern und Trennschaltern im Energienetz sowie zur Ansteuerung von Energieerzeugern wie Kraftwerken werden Steuerbefehle ins Energienetz gesendet. Diese Steuerbefehle werden von "Remote Terminal Units" (RTUs), "programmable logic controllers" (PLCs) und "intelligent electronic devices" (IEDs) empfangen und verarbeitet, um die Leistungsschalter und die Trennschalter usw. anzusteuern. In der Leitstelle ist bisher häufig ein lokales Rechenzentrum vorgesehen, auf dem die Leitstellensoftware wie z.B. "Sprectrum Power" läuft. Es werden rund um die Uhr Techniker in der Leitstelle bereitgehalten, die die Anzeigen des SCADA über den aktuellen Betriebszustand des Energienetzes kontrollieren und im Fehlerfall Gegenmaßnahmen wie z.B. die Abschaltung eines Netzabschnitts durchführen können. Die Leitstellensoftware wird in der Regel in einer zentralen Rechneranordnung betrieben, die beispielsweise als ein Rechenzentrum mit Prozessoren, Datenspeichern und Bildschirmen ausgebildet sein kann. Der Begriff "zentral" zielt dabei darauf ab, dass alle Messdaten aus dem Energienetz und alle Steuerbefehle für das Energienetz zentral verarbeitet werden.

Auch eine teilweise oder vollständige Ausbildung der RechnerAnordnung bzw. der Leitstellensoftware als eine Cloud-Applikation, also eine Serveranordnung mit dezentral verteilten Ressourcen zur Datenverarbeitung und Datenspeicherung, die über ein Datennetzwerk wie z.B. das Internet verbunden sind, kann vorgenommen werden.

Als Begleiterscheinung einer immer weiteren Verbreitung von verteilter Stromerzeugung, also beispielsweise durch Photovoltaik-Anlagen oder Windkraftanlagen, wird durch die immer zahlreicheren lokalen Stromerzeuger, die in das Nieder- und Mittelspannungsnetz einspeisen, eine Vorhersage eines Systemzustands des Energienetzes erschwert. Auch die Abhängigkeit von Wettereinflüssen steigt, weil z.B. Solarzellen stark von der Bewölkung und Windkraftanlagen von der Windstärke beeinflusst werden. Diese Probleme wirken auch auf die nächsthöhere Spannungsebene eines Energieübertragungsnetzes der Hochspannungsebene zurück, das hierdurch schwieriger zu steuern und vorherzusagen ist.

Klassische Verfahren für Zustandsschätzung aus dem Bereich der Übertragungsnetze sind in Verteilnetzen schwer anwendbar auf Grund der fehlenden gemessenen Information an im Schnitt 80% der Netzknoten. Daher werden häufig klassische Verfahren mit sog. Pseudomesswerten verwendet, mit deren Hilfe die Lastinformation modelliert wird. Diese Modelle sind jedoch sehr ungenau und erfordern meist weitere Verfahren wie z.B. eine Lastenskalierung, um die Lastinformation mit den gemessenen Werten zu initialisieren.

Die Unsicherheit bzgl. der Messwerte verschärft das Problem eines fehlenden bzw. unzureichend bekannten Netzmodells. Verteilnetzbreiter können nur dann zusätzliche Messinfrastrukturen planen und ausrollen, wenn auch eine korrekte und aktualisierte Information des Netzmodells vorhanden ist.

Systemdaten von Netzbetreibern, wie z.B. Daten eines Geoinformationssystems (GIS-Daten), die beispielsweise die geographische Lage von Betriebsmitteln und Leitungen beschreiben, sind üblicherweise nicht standardisiert gespeichert. Das verhindert den Datenaustausch der Systeminformation zwischen unterschiedlichen Netzbetreibern sowie eine standardisierte Verarbeitung in Softwareprodukten. GIS-Systeme für Energieversorgungsnetze sind beispielsweise aus den Veröffentlichungen "GIS Based Electrical System Planning and Network Analysis" von Mathankumar und Loganathan, World Engineering & Applied Sciences Journal 6 (4), pages 215-255, 2015 sowie "GIS for Electric Distribution" von ESRI.COM bekannt.

Die Transformation der Systemdaten zu einem standardisierten Austauschformat wie beispielsweise einem sog. "common information model" (CIM) format ist derzeit nicht automatisiert und erfordert selbst für Experten eine aufwendige, manuelle Ausarbeitung. CIM ist derzeit eher bei Netzleitstellen der Hochspannungsebene verbreitet, jedoch nicht bei dem Softwarelösungen der Nieder- und Mittelspannungsebene. Mit CIM (oder einem vergleichbaren Format) können beispielsweise Daten eines SCADA Systems, eines meter-data-management (MDM) Systems oder eines Geoinformationssystems ausgetauscht und das Netzmodell für z.B. Lastfluss- oder Zustandsschätzung-Anwendungen verarbeitet werden. Der Grund für die manuellen Aufwände ist einerseits, dass die (z.B. in einem GIS-System) gespeicherten Systemdaten in der Regel nur eine Serialisierung sind, bei der die topologische Systeminformation verloren geht. Andererseits sind Systemdaten nicht auf standardisierte Weise gespeichert und können daher nicht ohne Weiteres von Softwarelösungen ausgewertet werden.

Bisher werden beispielsweise sog. "Extract-Transform-Load" Softwareprodukte von menschlichen Experten eingesetzt, um einen Datenaustausch zu ermöglichen. Dabei ist jedoch ein hoher manuelle Aufwand nötig, um die Datentransformationen zu steuern und zu kontrollieren. Für ein einziges Projekt zur Parametrierung einer Leitstellensoftware der Hochspannungsebene für ein Energienetz kann z.B. ein Aufwand von mehreren Tagen für einen Experten anfallen. Aufgrund der viel größeren Komplexität von Niederspannungsnetzen wäre für den Experten ein bis zu 2 Größenordnungen höherer Aufwand zu erwarten, was i.d.R. wegen Personalknappheit und den entstehenden Kosten nicht leistbar ist. Beispielsweise erläutern die Websites "GISGeography - Data Engineering in GIS: Let the ETL Journey Begin" (https://gisgeography.com/data-engineering-gis/) und "Spatial ETL Tools ("https://desktop.arcgis.com/de/arcmap/latest/extensions/data -interoperability/spatial-etl-tools.htm") bekannte Ansätze des Standes der Technik.

Ausgehend von bekannten Verfahren für eine Analyse von Netzwerkinformationen stellt sich an die Erfindung die Aufgabe, ein Verfahren anzugeben, mit dem vergleichsweise einfach, schnell und zuverlässig Netzwerkinformationen zur Erkennung einer Netztopologie einsetzbar sind.

Die Erfindung löst diese Aufgabe durch ein Computerimplementiertes Verfahren gemäß Anspruch 1.

Ein elektrisches Energieversorgungsnetz weist beispielsweise ein Niederspannungsnetz und/oder ein Mittelspannungsnetz auf.

Ein Mittelspannungsnetz weist beispielsweise eine Nennspannung von 1 kV bis 52 kV auf. Ein Niederspannungsnetz weist beispielsweise eine Nennspannung von höchstens 1 kV auf.

Netzwerkinformationen sind beispielsweise Daten über im jeweiligen elektrischen Energienetz vorhandene Leitungen und installierte Betriebsmittel wie Transformatoren und Schalteinrichtungen, deren Verschaltung (Topologie) und Parametrierung (in Bezug auf die Datenkommunikation oder elektrische Grenzwerte für eine Auslösung von Schaltvorgängen). Diese Netzwerkinformationen können bei verschiedenen Netzbetreibern aufgrund unterschiedlicher Software in unterschiedlichen Datenformaten vorliegen und können i.d.R. nur als Datentabellen in serialisierter Form exportiert werden. Beispielsweise kann eine Datei mit Text, Tabelleneinträgen usw. im CSV-Format vorliegen. Die Erfindung ermöglicht es, von einem ersten Netzwerkbetreiber die serialisierten Netzwerkinformationen in einem anwendungsspezifischen Datenformat zu empfangen, das sich von dem anwendungsspezifischen Datenformat anderer Netzwerkbetreiber unterscheidet. Die Erfindung stellt damit quasi eine universelle Methode zur Verfügung, um Netzwerkinformationen auszulesen und zu einer konsistenten Topologie zu kombinieren. Die Notwendigkeit, eine Datenkonvertierungsmethode für jeden denkbare Kombination von ersten anwendungsspezifischen Datenformaten als Input und dem zweiten anwendungsspezifischen Datenformat als Output zu programmieren, entfällt.

Eine Kommunikationseinrichtung ist z.B. für eine Datenkommunikation nach dem TCP/IP Protocol, einem anderen üblichen Internetkommunikationsprotokoll oder dem Kommunikationsstandard IEC 61850 ausgebildet.

Eine Einrichtung im Sinne der Erfindung weist z.B. Prozessoren, Prozessorkerne, GPUs, Datenspeicher und ggf. eine Ausgabeeinrichtung wie einen Bildschirm auf. Auch eine teilweise oder vollständige Ausbildung der Einrichtung als Software ist möglich. Auch der Einsatz einer Cloud-Applikation, also einer Softwarekomponente zur Ausführung auf einer Serveranordnung mit dezentral verteilten Ressourcen zur Datenverarbeitung und Datenspeicherung, die über ein Datennetzwerk wie z.B. das Internet verbunden sind, kann vorgesehen werden.

Systemkomponenten sind z.B. die Komponenten, aus denen das Verteilnetz besteht, wie etwa Leitungen und Betriebsmittel.

Ein Deserialisieren der serialisierten Netzwerkinformationen bedeutet beispielsweise, aus den in den serialisierten Informationen, die beispielsweise Tabellen mit Daten zu Transformatoren und Schalteinrichtungen enthalten, wieder ein komplettes topologisches Abbild des elektrischen Energienetzes zu bauen.

Ein Komponententyp weist z.B. eine genaue Bezeichnung einer Systemkomponente wie einer Leitung, eines Transformators, eines Schalters, etc. auf.

Der Komponententyp kann mit Herstellerangaben (genaue Modellbezeichnung, Kennzeichnung, Parameter, Leistungsfähigkeit, usw.) hinterlegt werden. Dies sind Komponenteneigenschaften im Sinne der Erfindung.

Die Netzwerktopologie umfasst beispielsweise einen im zweiten anwendungsspezifischen Datenformat bereitgestellten mathematischen Graph, d.h. einen als Schaltbild visualisierbaren Datensatz, auf. Er beinhaltet Typen und Eigenschaften der Systemkomponenten.

Im Folgenden wird eine Übersicht weiterer verwendeter Begriffsdefinitionen gegeben:

| *Begriff:* | *Beschreibung:* |
|---|---|
| Systemtopologie | Ein Graph, der aus georeferenzierten Knoten und Kanten besteht. Die Zuordnung der Systemkomponenten als Knoten und Kanten ist zunächst nicht enthalten. |
| Systemkomponenten | Die Komponenten, aus denen das Verteilnetz besteht (allgemeine Definition, genauer Typ der Netzkomponente nicht gemeint). |
| Komponententyp | genaue Bezeichnung einer Systemkomponente (e.g., Leitung, Transformator, Schalter, etc.) . |
| Fremdschlüssel | Spalte in der Datentabelle enthaltend die Konnektivitäts-Information mit weiteren, unterschiedlichen Datentabellen. |
| Taxonomie | Auflistung von Begriffen (z.B., Systemkomponenten, Eigenschaften der Systemkomponenten). |
| Ontologie | Taxonomie (im Sinne eine Logik) mit zusätzlichen Beziehungen und Ableitungsregeln bezüglich der Begriffe (z.B. vergleichbar mit einem sog. "Entity Relationship Diagramm", einem gängigen Modellierungsansatz). |
| Benutzer | Experten eines Netzbetreibers, zuständig für manuelle Eingriffe und Benutzerfeedback bei der Zuordnung der Systemkomponente sowie der Spalteneinträge. |
| Anbieter-Experten | Experten des Anbieters bzw. Herstellers der Software, zuständig für die Definition der internen Ontologie sowie Zielformatanhängige Taxonomie. Ggf. auch zuständig für die Validierung und Generalisierung der zusätzlichen, benutzerdefinierten Regeln und Roll-Outs der Updates. |

Die Erfindung stellt einen Ansatz bereit, der Netzbetreiber-Systemdaten in Form einer Systemtopologie de-serialisiert und die Transformation zum einem Zielformat so weit wie möglich automatisiert und unabhängig von externen Datenmodellen hält. Dies begrenzt oder eliminiert einen manuellen Aufwand bei der Transformation der Systemdaten zu einem Austauschformat und ermöglicht gleichzeitig den Datenaustausch der Systeminformation zwischen unterschiedlichen Netzbetreibern sowie eine standardisierte Verarbeitung in Softwareprodukten.

Die Transformation von Netzbetreiber-Systemdaten zu einem Zielformat muss derzeit manuell durch einen menschlichen Experten erfolgen, was zeitaufwändig und fehleranfällig ist. Die Erfindung stellt mit der automatisierten oder teilautomatisierten Deserialisierung der Eingangsdaten und einer Transformation zum Zielformat für eine Netzleitstellensoftware eine Lösung für ein immer stärker auftretendes Problem bereit. Derzeit existiert am Markt keine applikationsbereite, automatisierten Lösung, die es Netzbetreibern gestattet, die in den Softwarelösungen der niederen Spannungsebenen vorhandenen Topologieinformationen in die verantwortliche Netzleitstelle zu übertragen. Eine manuelle Auswertung der unterschiedlichsten Ausgaben der vielfältigen Softwarelösungen würde wochen- bis monatelange Arbeit von erfahrenen Spezialisten erfordern, was im Hinblick auf die Kosten und den Zeitaufwand nicht durchführbar ist.

Die Vorteile des vorgeschlagenen Ansatzes beinhalten folgende Aspekte:
- es wird ein skalierbarer Ansatz auf unterschiedliche Netzbetreiber-Eingangsdaten aufgesetzt und in ein einheitliches Zielformat zum Datenaustausch überführt.
- es kann vorgesehen werden, dass ein Experte die automatisch erstellten Ergebnisse überprüft und ggf. Zwischenergebnisse anpasst. Dies ist ein sehr flexibler Ansatz. Dieses Benutzerfeedback kann zur Verfeinerung des Ansatzes verwendet werden. Diese Verfeinerung kann in Form eines Software-Updates mit anderen Benutzern geteilt werden. Das System wird also immer präziser, je mehr es genutzt wird.
- Bei Nutzung von Verfahren des maschinelle Lernens wird bei größerer Nutzung schon bei einem einzelnen Netzbetreiber / einer einzelnen Leitstelle, die Genauigkeit und der Automatisierungsgrad verbessert (das erfindungsgemäße Verfahren macht weniger Fehler).
- Es handelt sich um einen "End-to-end" Ansatz, um Eingangsdaten zum Zielformat zu transformieren.
- Der Ansatz ermöglicht es, eine automatisierte Deserialisierung der Netzbetreiber-Systemdaten unabhängig von externen Datenmodellen (e.g., Eingangs - und Ausgangsdatenmodell) vorzunehmen.

Mittels der Erfindung kann ein Energienetz einmalig konfiguriert werden. In einer Weiterbildung kann der Prozess jedoch auch regelmäßig wiederholt werden, um neue Betriebsmittel (Photovoltaik-Anlagen auf Hausdächern, Elektroauto-Ladesäulen, usw.) automatisiert zu konfigurieren, wenn diese auf diese auf der Niederspannungsebene oder der Mittelspannungsebene hinzukommen. Der manuelle Aufwand für eine solche Konfiguration wäre ohne die erfindungsgemäße Lösung für eine Großstadt mit über 10.000 Ortsnetztransformatorstationen nicht zu leisten.

Mittels der Erfindung werden aus den Netzwerkinformationen auch viele nicht benötigte Daten aussortiert und verworfen. Dies können z.B. Parameter für Schutzgeräte, Namen von Wartungstechnikern, usw., sein.

Es ist zwar aus der Veröffentlichung "Building Large-Scale U.S. Synthetic Electric Distribution Systems Models" von Mateo et al., IEEE Transactions on Smart Grid, Vol 11, No.6, Nov. 2020, ein Verfahren zum erzeugen einer Systemtopologie bekannt. Dabei werden im Gegensatz zur Erfindung jedoch keine Netzwerkinformationen eines realen Netzes importiert, sondern vielmehr aus öffentlich zugänglichen Quellen wie etwas Straßenkarten approximiert. Die Veröffentlichung setzt ferner voraus, dass Systemkomponenten und Systemeigenschaften a priori bekannt sind. Die Erfindung geht über dieses Ansatz hinaus.

In einer bevorzugten Ausführungsform des erfindungsgemäßen computerimplementierten Verfahrens wird die Netzwerktopologie für eine Steuerung des elektrischen Niederspannungsnetzes und/oder eines elektrischen Mittelspannungsnetzes mittels einer Netzleiteinrichtung verwendet.

In einer weiteren bevorzugten Ausführungsform des erfindungsgemäßen computerimplementierten Verfahrens wird für das Deserialisieren ein regelbasiertes Verfahren eingesetzt, bei dem anhand der serialisierten Netzwerkinformationen Identifikationsspalten in Datentabellen erkannt werden, und anhand von Kennzeichnungen in den Identifikationsspalten die Systemkomponenten als miteinander verbunden erkannt werden. Kennzeichnungen können z.B. daran erkannt werden, dass eine eineindeutige Zeichenkombination für alle Einträge in einer Tabellenspalte vorliegt, d.h. dass keine doppelten Einträge vorliegen. Spannungen dagegen können z.B. daran erkannt werden, dass in der betreffenden Spalte diskrete Werte in einem auf die Nennspannung des Energienetzes abgestimmten Wertebereich vorkommen. Das erfindungsgemäße Verfahren umgeht damit die Problematik, dass häufig der Header bzw. die Überschrift einer Tabellenspalte nicht eindeutig bezeichnet ist. Beispielsweise kann ein vom Betreiberunternehmen Kurzzeichen eingetragen sein oder eine Bezeichnung in einer Fremdsprache, so dass im beschriebenen Ansatz eine Auslesen basierend auf einem unbekannten serialisierten Datenformat anhand der Spaltenüberschriften nicht funktioniert.

In einer weiteren bevorzugten Ausführungsform des erfindungsgemäßen computerimplementierten Verfahrens wird für das Erkennen der Komponententypen ein regelbasiertes Verfahren eingesetzt. Die Regeln für das Verfahren sind dabei von menschlichen Experten vorgegeben.

In einer weiteren bevorzugten Ausführungsform des erfindungsgemäßen computerimplementierten Verfahrens wird für das Erkennen der Komponententypen maschinelles Lernen eingesetzt. Beispielsweise kann ein künstliches neuronales Netz verwendet werden, das eine öffentlich zugängliche Software-Bibliothek wie z.B. TensorFlow als Basis nutzt. Es kann mit Vorteil insbesondere ein sog. "graph neural network" verwendet werden. Dabei werden i.d.R. keine sog. recurrent neural networks oder convolutional neural networks (CNNs) eingesetzt. Für das "supervised Training" kann z.B. ein Trainingsdatensatz vorgesehen werden, der GIS-Datensätzen eines Leitstellensystems verwendet. Alternativ oder zusätzlich kann ein Trainingsdatensatz aus synthetischen Daten, z.B. basierend auf "OpenStreetMap", abgeleitet werden.

In einer weiteren bevorzugten Ausführungsform des erfindungsgemäßen computerimplementierten Verfahrens werden für Systemkomponenten mindestens eine der folgenden Systemkomponenten eingesetzt wird; Transformator, Leitung, Schalteinrichtung, Schutzgerät, Netzregler.

In einer weiteren bevorzugten Ausführungsform des erfindungsgemäßen computerimplementierten Verfahrens werden die Komponenteneigenschaften anhand einer vorgegebenen Taxonomie und eines vorgegebenen Regelsatzes den erkannten Komponententypen zugeordnet.

Ausgehend von bekannten Anordnungen für eine Analyse von Netzwerkinformationen stellt sich ferner an die Erfindung die Aufgabe, eine Anordnung anzugeben, mit der vergleichsweise einfach, schnell und zuverlässig Netzwerkinformationen zur Erkennung einer Netztopologie einsetzbar sind.

Die Erfindung löst diese Aufgabe durch eine Anordnung nach Anspruch 8. Bevorzugte Ausführungsformen sind in den Ansprüchen 9 bis 14 beschrieben. Es ergeben sich sinngemäß die gleichen Vorteile wie eingangs für das erfindungsgemäße Verfahren erläutert.

Ausgehend von bekannten Computerprogrammprodukten für eine Analyse von Netzwerkinformationen stellt sich ferner an die Erfindung die Aufgabe, ein Computerprogrammprodukt anzugeben, mit dem vergleichsweise einfach, schnell und zuverlässig Netzwerkinformationen zur Erkennung einer Netztopologie einsetzbar sind.

Die Erfindung löst diese Aufgabe durch ein Computerprogrammprodukt nach Anspruch 15. Es ergeben sich sinngemäß die gleichen Vorteile wie eingangs für das erfindungsgemäße Verfahren erläutert.

Im Folgenden wird ein bevorzugtes Ausführungsbeispiel der Erfindung vorgestellt.

Im Folgenden wird eine technische Übersicht des Ansatzes beschrieben. Zunächst wird die System-Architektur dargestellt, dann die vorgeschlagene Methodik zur Lösung des Problems.

Bezüglich der Software-Architektur entspricht der Ansatz einer sog. "on-Premises" Client-Server-Architektur. Die Arbeit des Systems ist in zwei Subsystemen verteilt:
a) Client:
   z.B. ein lokaler Rechner des Benutzers bei den Verteilnetzbetreibern, der die Transformation seiner Systemdaten zum standardisierten Austauschformat anfordert; dieser kann ggf. identisch mit dem Server sein).
b) Server:
   z.B. ein zentraler Rechner bei den Netzbetreibern, auf dem die Systemdaten gespeichert sind, und der Ansatz ausgeführt wird. Die Ausgabe des Systems in Form von standardisierten Datenmodellen wird ebenfalls hier gespeichert.

Der Datenaustausch zwischen Client und Server erfolgt z.B. im XML-Format über ein Kommunikationsprotokoll, an das sich beide Subsysteme halten (z.B. FTP).

Eine Erweiterung des Systems zu einer off-Premise Client-Server-Architektur ist in einer anderen Ausgestaltung möglich. Dabei sind ausgewählte Funktionen bzw. Module des Systems in der Cloud (bzw. dem Anbieter-Server) ausgeführt. Eine solche Architektur würde die Kooperation mit Anbieter-Experten und anderen Netzbetreibern zur Weiterentwicklung des Ansatzes vereinfachen und befördern.

Konkret ist die Software-Architektur wie folgt aufgebaut:
Die erste Stufe (ein sog. "Front-End") ist die "User-Interface" (UI) Stufe und dient als Schnittstelle zwischen Client und Server. Die UI-Stufe läuft auf der Client-Seite und ermöglicht den Benutzer den Arbeitslauf zu definieren und die daraus entstandenen Ergebnisse über z.B. eine GIS-Applikation zu visualisieren und auszuwerten.
Die zweite Stufe (ein sog. "Back-End") läuft auf der Server-Seite und setzt sich aus der Datenstufe und einer Serie von Modulen zusammen, die die Funktionalität der vorgeschlagenen Methodik einsetzen. Das File-System bzw. Datenbank enthaltend die Systemdaten wird vom Netzbetreiber gepflegt. Wenn die Software-Architektur off-Premises ist, laufen ausgewählte Module in der Cloud. Zur korrekten Interaktion zwischen Client und Server stellt das Back-End geeignete APIs zur Verfügung.

Die erfindungsgemäße Lösung des eingangs geschilderten Problems ist wie folgt aufgebaut:
i) Deserialisierung der Systemdaten zu einer Systemtopologie anhand eines regelbasierten Verfahrens. Der Regelsatz ist von Anbieter-Experten definiert und kann ggf. vom Benutzer erweitert/verfeinert werden.
ii) Teilautomatisierte Zuordnung der Systemkomponenten basierend auf einer fixen, internen Ontologie bezüglich der Systemkomponenten. Diese Ontologie ist unabhängig von externen Datenmodellen. Die Zuordnung erfolgt über ein regelbasiertes Verfahren oder ein KI-Verfahren, ggf. unter Mitwirkung und/oder Kontrolle des Benutzers.
iii) Teilautomatisierte Zuordnung der Eigenschaften der Spalteneinträge basierend auf einer Zielformat-abhängigen Taxonomie. Die Taxonomie wird initial von Anbieter-Experten definiert. Sie kann anschließend durch das Verwenden des Tools erweitert werden. Die Zuordnung erfolgt über ein regelbasiertes Verfahren, bei dem ein manueller Eingriff zur Ergänzung/Korrektur vorgenommen werden kann.

### Zu i: Deserialisierung

Im Folgenden wird der regelbasierte Ansatz zur Deserialisierung der Eingangsdaten zu einer Systemtopologie dargestellt. Dabei werden die Eingangsdaten zu einer Systemtopologie automatisch und unabhängig von externen Datenmodellen (also Eingangs- oder Ausgangsdatenmodell) deserialisiert. Eine solche Deserialisierung rekonstruiert die topologische Systeminformation und ermöglicht eine graphische Übersicht bezüglich der Konnektivität zwischen den Systemkomponenten. Eine solche Ausgabe verringert einerseits der Aufwand eines Benutzers bei manuellen Eingriffen, andererseits ermöglicht es den Einsatz des nächsten Schrittes, bei dem das Verfahren auf die Konnektivität-Information zurückgreift. Das Verfahren funktioniert mit folgenden Schritten:
1) Zur Wiederherstellung der Konnektivität-Information zwischen zwei Systemkomponenten werden zuerst die Einträge (bzw. Tabellenzeilen) einer in den Eingangsdaten bzw. Netzwerkinformationen enthaltenen Datentabelle nach den sog. ID-Spalten durchsucht. Diese Spalten enthalten eindeutige Kennzeichnungen jeder Tabellenzeile.
   Dann wird die Konnektivität-Information der ersten Systemkomponente an der anderen Systemkomponenten validiert. Dies erfolgt, indem geprüft wird, ob der sog. Fremdschlüssel der ersten Systemkomponente mit dem Fremdschlüssel der anderen Systemkomponente übereinstimmt. Falls die Validierung fehlschlägt, versucht der Ansatz eine andere ID-Spalte in den Datentabellen zu identifizieren.
2) Falls der Ansatz keine ID-Spalten mit dem passenden Fremdschlüssel finden kann, dann werden die Konnektivität-Informationen regelbasiert erzeugt. In einem solchen Fall wird die Konnektivität zwischen zwei Netzkomponenten angenommen, wenn die räumlich beieinanderliegenden Endpunkte innerhalb eines vorgegebenen Umkreises liegen (nah benachbart sind).
3) Als Ausgabe produziert das Verfahren eine Systemtopologie in Form eines Graphen mit georeferenzierten Knoten und Kanten. Zusätzlich zur Geokoordinaten sind Knoten und Kanten auch die jeweiligen Eigenschaften aus den Datentabellen zugeordnet.
4) Dieses Verfahren ist unabhängig von externen Datenmodellen und erflogt automatisiert. Es besteht aber die Möglichkeit für den Benutzer, die Ausgabe zu überprüfen und eventuell manuelle Anpassungen an der Struktur des Graphen vorzunehmen. Für jede Anpassung ist der Benutzer gefragt, eine Motivation in Form einer Regel zu definieren. Solche lokalen Regeln werden dann von den Anbieter-Experten validiert und ggf. generalisiert und anschließend ins regelbasierte Verfahren integriert. Der angepasste Regelsatz wird dann dem Benutzer als Update zur Verfügung gestellt.

### Zu ii: Zuordnung der Systemkomponenten

Im Folgenden werden die Ansätze - ein regelbasiertes Verfahren und ein Active Learning-basiertes Verfahren, d.h. ein Verfahren des maschinellen Lernens, zur Zuordnung der Systemkomponenten dargestellt.

Dabei ist es von Vorteil, beide Verfahren in einem ersten Schritt nicht vollautomatisiert auszuführen, sondern basierend auf einer Basisfunktionalität anhand von Benutzerfeedback anzupassen, um die Genauigkeit zu verfeinern. Nach der Zuordnung der Komponententypen entsteht die Möglichkeit für den Benutzer die Systemtopologie mit zusätzlichen Systemkomponenten zu erweitern, die nicht in der fixen Ontologie definiert sind und Zielformat-spezifisch sind.

Beim regelbasierten Verfahren wird der Regelsatz von Anbieter-Experten anhand einer vorgegebenen Ontologie der Systemkomponenten initialisiert. Eine solche Ontologie ist unabhängig von externen Datenmodellen und umfasst die üblichen Systemkomponenten eines Verteilnetzes sowie ihre Beziehungen und Ableitungsregeln. Die Regeln für die Zuordnung orientieren sich an den topologischen Eigenschaften der Knoten und Kanten (Z.B. Grad des Knotens, d.h. dass ein Knoten mit einem hohen Grad viele Nachbarn aufweist, usw.) sowie der Dateneinträge (Z.B: binäre Einträge, was auf die Schaltereinstellungen offen/geschlossen hinweist).

Durch den initialen Regelsatz produziert das Verfahren einen ersten Vorschlag, der anschließend dem Benutzer im Zusammenhang mit der Systemtopologie für seine Auswertung gezeigt wird. Bei der Auswertung wird ein besonderer Fokus auf alle zugeordneten Systemkomponenten gelegt, deren sog. Vertrauenswert unterhalb eines benutzerdefinierten Schwellenwertes liegt. Mit anderen Worten werden diejenigen Ergebnisse, bei denen die größte Unsicherheit bzgl. einer korrekten Zuordnung besteht, dem Experten zur manuellen Überprüfung angeboten.

Beispielsweise sollten sich im Energienetz bei der Auswertung keine elektrischen Inseln zeigen. Ist dies der Fall, so erhält die Zuordnung der entsprechenden Systemkomponenten einen sehr niedrigen Vertrauenswert. Es kann z.B. auch ein Fall auftreten, bei dem das Verfahren zu 99 % Sicherheit eine Last erkennt und zu 70 % Sicherheit einen Transformator. In diesem Fall hätte die Last einen höheren Vertrauenswert - es würde eine Last erkannt werden.

Beispielsweise wird ein Knoten, dessen angeschlossene Kanten unterschiedliche Spannungen im Bereich unterschiedlicher Spannungsebenen aufweisen, als ein Transformator erkannt. Dieses regelbasierte Vorgehen kennzeichnet ein klassisches Expertensystem. Für diesen Anwendungsfall der Topologieerkennung sind jedoch bisher keine Expertensysteme kommerziell erhältlich.

Solche Knoten oder Kanten werden automatisch markiert, damit der Benutzer besonders aufmerksam gemacht werden kann. Grundsätzlich kann die vorgeschlagene Zuordnung aller Knoten und Kanten vom Benutzer angepasst werden, empfohlen sind aber nur die markierten Knoten und Kanten. Wenn der Benutzer die vorgeschlagene Zuordnung eines markierten Knotens oder einer markierten Kante anpasst, ist er gefragt, eine zusätzliche Regel zu formulieren, die seine Entscheidung motiviert.

Die auf diese Weise definierten zusätzlichen Regeln werden von Anbieter-Experten validiert und ggf. generalisiert und zur Verbesserung des Verfahrens an den initialen Regelsatz ergänzt. Die Ergänzungen werden dann dem Benutzer in Form eines Updates zur Verfügung gestellt. Eine solche Vorgehensweise führt dazu, dass Systemkomponenten, die in der vorherigen Iteration unterhalb des erwähnten Vertrauenswertes lagen, in zukünftigen Iterationen darüber liegen.

Das Active-Learning-basierte Verfahren wird im Folgenden beschrieben:
Anhand der vorgegebenen Ontologie der Systemkomponenten wird ein Datensatz manuell von Anbieter-Experten initialisiert (d.h. es findet supervised learning statt). Ein solcher Datensatz dient zum initialen Training eines neuronalen Netzes und umfasst Systemtopologien, deren Knoten und Kanten bereits eine Systemkomponente manuell zugeordnet wurde.

Das trainierte neuronale Netz wertet dann eine Systemtopologie ohne Zuordnung der Systemkomponenten an die Knoten und Kanten aus und produziert einen Vorschlag der Zuordnung der Systemkomponenten. Im nächsten Schritt, z.B. über ein sog. "Pool-based Sampling" Verfahren, werden alle Knoten und Kanten markiert, deren Vorschlag am ungenausten ist. Solche markierten Proben repräsentieren die Proben, bei denen das Verständnis des neuronalen Netzes am geringsten ist. Der Vorschlag mit den markierten Proben wird dem Benutzer in Verbindung mit der Systemtopologie gezeigt und die Systemkomponente aller markierten Proben kann vom Benutzer bestätigt (wenn der Komponententyp korrekt ist) oder entsprechend angepasst werden. Grundsätzlich können alle Systemkomponenten vom Benutzer angepasst werden, verpflichtend sind aber nur die markierten Proben. Nach dem Benutzerfeedback wird der angepasste Vorschlag in den ursprünglichen Trainings-Datensatz integriert und das neuronale Netz wird anhand des erweiterten Datensatzes erneut trainiert. Dadurch wird die Genauigkeit des Vorschlags in der nächsten Iteration aufgrund der zusätzlichen Informationen und dem erneuten Training erhöht. Ein genauerer Vorschlag führt auch zu einer geringeren Anzahl an markierten Proben in der nächsten Iteration und gleichzeitig zu einem reduzierten Benutzerfeedback. Das verfeinerte, neuronale Netz kann dann den anderen Benutzern für zukünftige Applikationen über ein Update zur Verfügung gestellt werden.

### Zu iii: Zuordnung der Eigenschaften

Im Folgenden wird der Ansatz zur Zuordnung der Eigenschaften der Systemkomponenten dargestellt. Dafür wird von Anbieter-Experten eine vereinfachte Taxonomie der Eigenschaften definiert sowie ein Regelsatz für die Zuordnung bereitgestellt. Anbieter-Experten kennen a priori nicht alle verpflichtenden Eigenschaften, die für die Transformation zu dem Zielformat nötig sind. Aus diesem Grund enthält die Taxonomie ursprünglich nur eine minimale Anforderung an Eigenschaften. Wenn das Zielformat auf einer Ontologie aufbaut, die aus derselben Grundontologie der internen Ontologie zur Zuordnung der Systemkomponenten abgeleitet ist, dann kann die Taxonomie direkt aus einer solchen Ontologie extrahiert werden. Der initiale Regelsatz kann Beziehungen und Ableitungsregeln aus der internen Ontologie integrieren. Die Zuordnung der Eigenschaften der Systemkomponenten ist wie folgt aufgebaut:
Jedem Knoten und jeder Kante aus der Systemtopologie sind die jeweiligen Daten aus der Datentabelle zugeordnet. Anhand des initialen Datensatzes ordnet der regelbasierte Ansatz alle Eigenschaften, die in der Taxonomie enthalten sind, an die jeweiligen "Records" bzw. Systemkomponenten zu. Wenn keine Eigenschaft und Regel für einen Recordtyp steht, wird auch keine Eigenschaft zugeordnet.

Im nächsten Schritt wertet der Benutzer aus, welche Records keine Eigenschaft erhalten haben und fügt einerseits eine neue Eigenschaft in der Taxonomie hinzu, andererseits definiert er eine neue passende Regel für ihre Zuordnung. Solche zusätzlichen Eigenschaften und Regeln werden von Anbieter-Experten validiert und ggf. generalisiert und anschließend in die Taxonomie und in den Regelsatz integriert. Die Erwartung ist, dass eine solche Vorgehensweise dazu führt, dass Eigenschaften, die in der vorherigen Iteration nicht zugeordnet wurden, in der nächsten Iteration zugeordnet werden können. Ein solches Verfahren verringert den manuellen Aufwand des Benutzers und erhöht schrittweise die Automatisierungsfähigkeit des Verfahrens. Nachdem alle vom Zielformat verpflichtenden Spalteneinträge manuell oder automatisiert zugeordnet sind, transformiert das Verfahren die Ausgabe in das definierte Zielformat.

Zur besseren Erläuterung der Erfindung zeigen in schematischer Darstellung die
- Figur 1: ein erstes Ausführungsbeispiel der Erfindung, und
- Figur 2: eine Übersicht eines erfindungsgemäßen Verfahrens, und
- Figur 3: ein Beispiel für eine Zuordnung von Systemkomponenten und Systemeigenschaften.

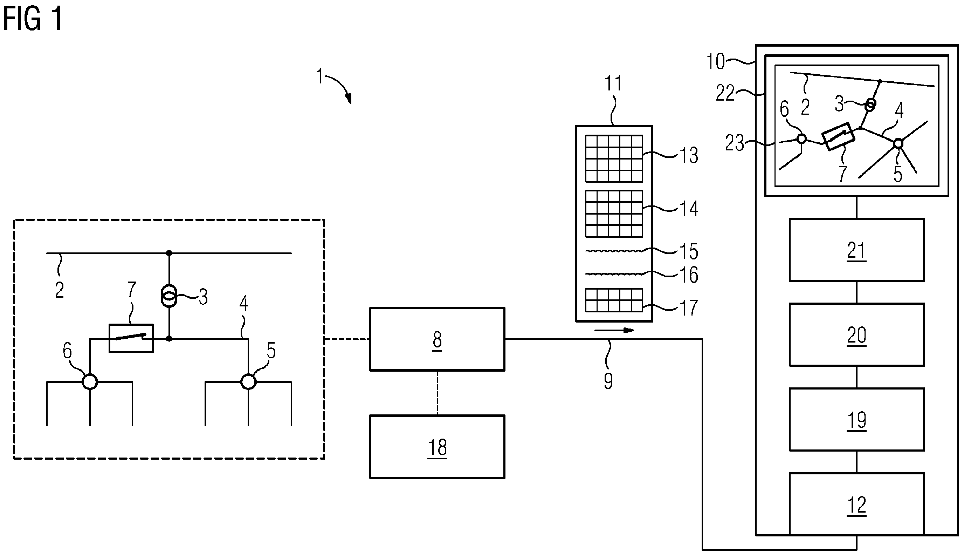

Die Figur 1 zeigt ein erstes Ausführungsbeispiel der Erfindung. Bei dem computerimplementierten Verfahren 1 liegt ein von einem Netzbetreiber gesteuertes elektrisches Niederspannungs- und Mittelspannungsnetz 2, 3, 4, 5, 6, 7 vor. An einer Mittelspannungsleitung 2 ist ein Transformator 3 angeschlossen, der die Niederspannungsebene 4 mit elektrischer Energie versorgt. In der Niederspannungsebene befindet sich außerdem eine Schalteinrichtung 7 sowie Verteilknoten 5, 6 zum Versorgen einzelner Straßenzüge bzw. Haushalte. Dieses elektrische Energieversorgungsnetz wird teilweise mittels Sensoren (nicht dargestellt) überwacht. Die Messwerte der Sensoren werden in einer Netzleiteinrichtung 8 des Netzbetreibers verarbeitet. Außerdem wird von einem Geoinformationssystem 18 eine Topologie des elektrischen Energieversorgungsnetzes 2, 3, 4, 5, 6, 7 für die Netzleiteinrichtung 8 bereitgestellt, d.h. die geographische Position und Verschaltung der Betriebsmittel ist bekannt.

Die Netzleiteinrichtung 8 kann die vorhandenen Netzwerkinformationen, d.h. die Topologie mit Informationen über die Verschaltung der Leitungen und der Betriebsmittel sowie Sensordaten usw., jedoch nicht in einer Form exportieren, die die geografischen Informationen über die Position und Art der Betriebsmittel sowie ihre Eigenschaften direkt als Graph rekonstruierbar macht.

Stattdessen ist die Netzleiteinrichtung 8 ausgebildet, die vorliegenden Netzwerkinformationen in serialisierter Form als eine Datei 11, beispielsweise im Format CSV, auszugeben. Die Datei weist im Wesentlichen Text- und Zahleneinträge in Tabellen 13, 14, 17 sowie Zeilen mit Text 15, 16 auf. Die Datei 11 wird von der Netzleiteinrichtung 8 des lokalen Netzbetreibers über eine Datenkommunikationsverbindung 9 an eine Kommunikationseinrichtung 12 einer Anordnung 10 für eine Analyse von Netzwerkinformationen übermittelt.

Die Anordnung 10 ist beispielsweise Teil einer Netzleitstelle eines übergeordneten Energieübertragungssystems einer Hochspannungsebene, dem die Betreiberunternehmen der lokalen Mittelspannungs- und Niederspannungsnetze mit ihren Netzleiteinrichtungen 8 untergeordnet sind. Die Anordnung 8 weist eine Deserialisierungseinrichtung 19 auf, die für ein Deserialisieren der serialisierten Netzwerkinformationen aus der Datei 11 ausgebildet ist. Als Ausgabe der Deserialisierungseinrichtung liegen die Netzwerkinformationen aus der Datei 11 wieder in Form eines Graphen mit Knoten und Kanten vor, wobei den Knoten die Betriebsmittel, bzw. Systemkomponenten und ihre Eigenschaften noch nicht zugeordnet sind. Hierfür ist eine erste Zuordnungseinrichtung 20 vorgesehen, um die Komponententypen zuzuordnen. In einem nächsten Schritt ist eine zweite Zuordnungseinrichtung 21 ausgebildet, um auch die Komponenteneigenschaften der Systemkomponenten zuzuordnen. All diese Informationen werden in einer Topologieausgabeeinrichtung 22 in Form einer Netzwerktopologie als Graph bereitgestellt, wobei der Graph die Eigenschaften der Systemkomponenten sowie deren geografische Informationen beinhaltet.

Mittels der Erfindung ist es möglich geworden, die Datei 11 in einem ersten anwendungsspezifischen Datenformat in serialisierter Form in eine Ausgabedatei 23 in einem zweiten anwendungsspezifischen Format bereitzustellen, ohne dass vorab der genaue Datentyp und die Datenstruktur für die von der Netzleiteinrichtung 8 exportierte Datei 11 vorgegeben sein muss.

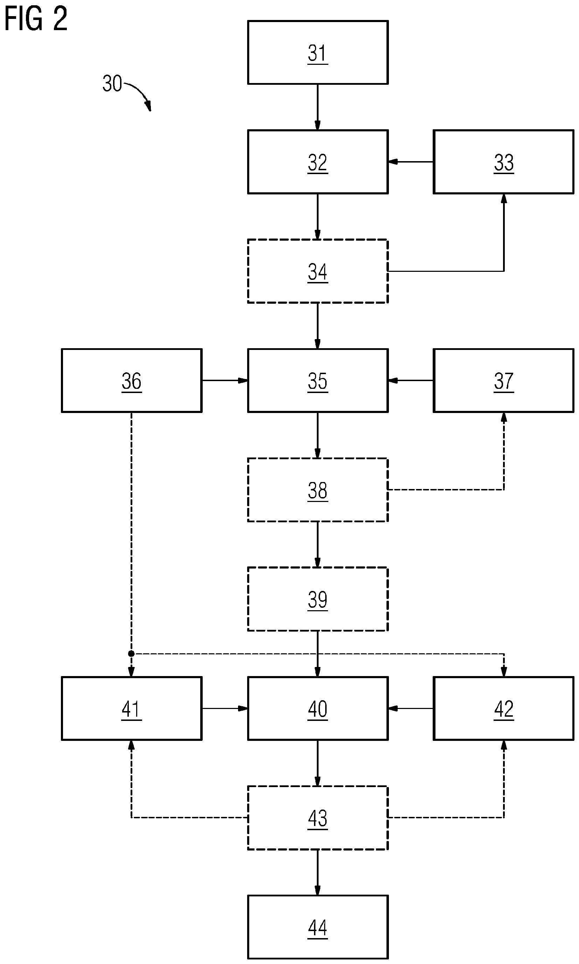

Die Figur 2 zeigt ein Beispiel 30 für eine Zuordnung von Systemkomponenten und Systemeigenschaften. Dabei sind obligatorische Verfahrensschritte mit durchgezogenen Kästchen angegeben, während fakultative Schritte (in der Regel manuelle Überprüfungen oder Korrekturen) in gestrichelten Kästchen angegeben sind. Die Eingangsdaten eines Netzbetreibers wie z.B. Geoinformationsdaten werden in einem ersten Schritt 31 bereitgestellt und in einem zweiten Schritt 32 zu einer Systemtopologie deserialisiert. Schritt 34 sieht einen fakultativen manuellen Eingriff zur Anpassung der Systemtopologie vor, der gegebenenfalls zur Verfeinerung der Methodik angewendet werden kann. Das Ergebnis des Schrittes 34 wird im Rahmen einer Feedbackschleife zur Verfeinerung der Verfahren zur Deserialisierung in das regelbasierte Verfahren 33 eingespeist. Das erweiterte Verfahren 33 zur Deserialisierung der Systemtopologie kann dann wiederum im Schritt 32 eingesetzt werden, um ein noch besseres Ergebnis zu erzielen.

Die deserialisierte Systemtopologie wird im Schritt 35 dazu benutzt, Systemkomponenten zuzuordnen. In einem fakultativen Schritt 38 kann ein Nutzerfeedback über die Korrektheit der Zuordnung der Systemkomponenten erfolgen, dass wiederum im Schritt 37 zu einer Verfeinerung eines regelbasierten, bzw. Active Learning Verfahrens verwendet wird. Auch hier ist also eine Feedbackschleife vorgesehen. Das verfeinerte regelbasierte oder Active Learning Verfahren 37 wird dann anschließend im Schritt 35 nochmals ausgeführt, um eine verbesserte Zuordnung der Systemkomponenten zu ermöglichen. Ferner ist es möglich, in einem weiteren fakultativen Schritt 39 einen manuellen Eingriff für zusätzliche Systemkomponenten vorzusehen, die nicht korrekt erkannt wurden.

Im nächsten Schritt 40 werden die Eigenschaften den Systemkomponenten zugeordnet. Auch hier kann ein Benutzerfeedback im Schritt 43 erfolgen, das über eine Feedbackschleife zur Verfeinerung des Verfahrens im Schritt 42 verarbeitet wird. Das verfeinerte regelbasierte Verfahren wird im Rahmen einer Feedbackschleife wiederum dem Schritt 40 für die Zuordnung der Eigenschaften der Systemkomponenten verwendet. Anhand eines fakultativen Benutzerfeedbacks aus dem Schritt 43 kann ferner eine Feedbackschleife zur Erweiterung der Taxonomie vorgesehen werden. Hierbei wird im Schritt 41 eine zielformatabhängige Taxonomie aus der internen Ontologie abgeleitet oder explizit definiert. Diese zielformatabhängige Taxonomie kann beispielsweise aus dem Schritt 41 im Rahmen einer Feedbackschleife für eine verfeinerte Zuordnung der Eigenschaften der Systemkomponenten im Schritt 40 bereitgestellt werden. Die zielformatabhängige Taxonomie aus dem Schritt 41 kann darüber hinaus auch zur Verfeinerung des regelbasierten Verfahrens aus dem Schritt 42 verwendet werden.

Darüber hinaus kann in einem Schritt 36 vorgesehen sein, eine fixe interne Ontologie der Systemkomponenten 36 vorzusehen, und diese dem Schritt 35 für die Zuordnung der Systemkomponenten zur Verfügung zu stellen.

Wenn das Zielformat auf einer Ontologie aufbaut, die aus derselben Grundontologie der internen Ontologie abgeleitet ist, so kann die fixe interne Ontologie aus dem Schritt 36 auch dem Schritt 41 zur Verfügung gestellt werden, um eine zielformatabhängige Taxonomie anzugeben.

Im letzten Schritt 44 wird das Zielformat zum Datenaustausch im zweiten anwendungsspezifischen Datenformat bereitgestellt, indem nun ein Graph mit hinterlegten Systemkomponenten, deren Topologie und geografischer Position sowie Eigenschaften zur Verfügung steht. Beispielsweise kann ein sogenannten CIM-Modell verwendet werden.

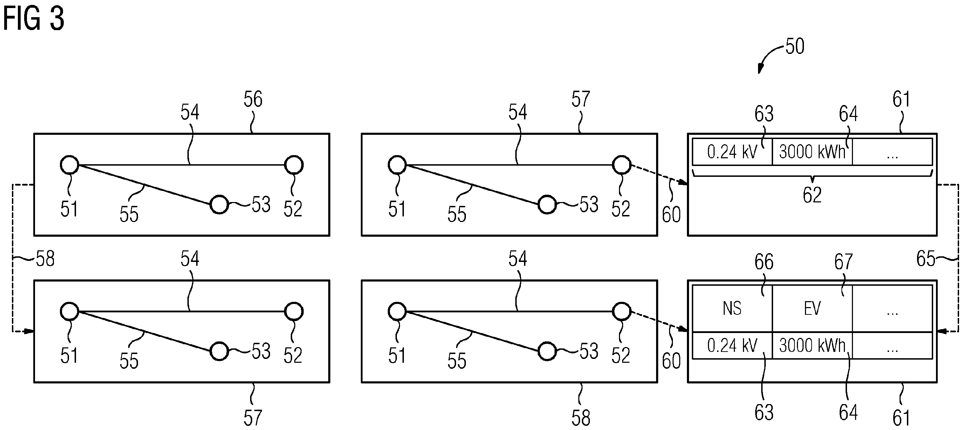

Die Figur 3 zeigt ein Beispiel 50 für eine Zuordnung von Systemkomponenten und Systemeigenschaften. In einem ersten Schritt liegen bereits Graph-Informationen 56 vor, d.h. dass deserialisierte Netzwerkinformationen als Systemgraph mit Knoten und Leitungen angegeben sind. Es ist jedoch die Art der Knoten und Kanten unbekannt. Der Systemgraph 56 zeigt im Beispiel Knoten 51, 52, 53, die mit Kanten 54, 55 verbunden sind.

Auf diesem Systemgraph 56 kann beispielsweise ein regelbasiertes Verfahren angewendet werden. Dabei kann eine erste Regel derart durchgeführt werden, dass ein Transformator erkannt wird, wenn ausgehend von einem Knoten mehr als eine Leitung vorhanden ist. Entsprechend wird der Knoten 51 als Transformator erkannt. Eine zweite Regel kann angewendet werden, die besagt, dass es sich bei einem Knoten um eine Last handelt, wenn es keine Kante gibt, die von dem Knoten ausgeht. Entsprechend werden die beiden Knoten 52, 53 als Lasten erkannt. Im Ergebnis wird über die Anwendung der Regeln in einem Schritt 58 ein Systemgraph 57 erzeugt, bei dem den Knoten Systemkomponenten zugeordnet sind.

In einem nächsten Schritt wird für den Systemgraph 57 eine Zuordnung der Systemkomponenten und deren Eigenschaften vorgenommen. Beispielsweise steht als Ausgangssituation der Systemgraph 57 mit Zuordnung der Systemkomponenten zur Verfügung, wobei eine Datentabelle mit Einträgen, bzw. Records, für die Eigenschaften der Systemkomponenten verfügbar ist. Die Datentabelle 61 weist beispielsweise in einer Zeile den Eintrag 0,24 Kilovolt in der Zelle 63 und 3000 Kilowattstunden in der Zelle 64 auf. Dabei kann es unterschiedliche Einträge 62 für eine Last geben. Diese Datentabelle 61 wird nun beispielsweise durch ein regelbasiertes Verfahren ausgewertet. Eine erste Regel kann lauten: wenn kV in einer Spalte geschrieben ist, dann handelt es sich um die nominale Spannung. Eine weitere Regel kann lauten, dass wenn Kilowattstunden (kWh) in einer Spalte auftaucht, es sich um einen Energieverbrauchswert handelt. Im Ergebnis wird ein Systemgraph 58 erzeugt, bei dem der Last 52 (hier angedeutet mit Pfeil 60) Einträge in der Datentabelle 61 zugeordnet sind. Dabei wurde mittels des Verfahrens erkannt, dass es sich bei der Zelle 63 um eine nominale Spannung, hier angedeutet in Zelle 66 mit dem Eintrag NS handelt. Ferner wurde erkannt, dass es sich bei der Zelle 64 um einen Energieverbrauch handelt, hier angedeutet durch den Eintrag EV in der Zelle 67. Damit liegt als Ergebnis des Verfahrens der Systemgraph 58 vor, bei dem allen Knoten die Art der Systemkomponenten sowie die Systemeigenschaften gemäß weiterer Datentabellen zugeordnet sind.

## Patentansprüche

1. Computerimplementiertes Verfahren für eine Analyse von Netzwerkinformationen eines elektrischen Energieversorgungsnetzes (2,3,4,5,6,7),
mit den Schritten:
Empfangen von serialisierten Netzwerkinformationen in einem ersten anwendungsspezifischen Datenformat mittels einer Kommunikationseinrichtung (12), wobei die serialisierten Netzwerkinformationen Informationen über Systemkomponenten aufweisen,
**gekennzeichnet durch** die Schritte:
Deserialisieren der serialisierten Netzwerkinformationen mittels einer Deserialisierungseinrichtung (19), und Zuordnen von Komponententypen anhand der Informationen über Systemkomponenten mittels einer ersten Zuordnungseinrichtung (20), und
Zuordnen von Komponenteneigenschaften anhand der Informationen über Systemkomponenten mittels einer zweiten Zuordnungseinrichtung (21), und
Bereitstellen einer Netzwerktopologie (23,58), die als Graph Typen und Eigenschaften der Systemkomponenten beinhaltet, in einem zweiten anwendungsspezifischen Datenformat mittels einer Topologieausgabeeinrichtung (22).

2. Computerimplementiertes Verfahren nach Anspruch 1, **dadurch gekennzeichnet, dass**
die Netzwerktopologie für eine Steuerung des elektrischen Energieversorgungsnetzes (2,3,4,5,6,7) mittels einer Netzleiteinrichtung verwendet wird.

3. Computerimplementiertes Verfahren nach Anspruch 1 oder 2, **dadurch gekennzeichnet, dass**
für das Deserialisieren ein regelbasiertes Verfahren eingesetzt wird, bei dem anhand der serialisierten Netzwerkinformationen Identifikationsspalten in Datentabellen erkannt werden, und anhand von Kennzeichnungen in den Identifikationsspalten die Systemkomponenten als miteinander verbunden erkannt werden.

4. Computerimplementiertes Verfahren nach einem der vorhergehenden Ansprüche, **dadurch gekennzeichnet, dass** für das Erkennen der Komponententypen ein regelbasiertes Verfahren eingesetzt wird.

5. Computerimplementiertes Verfahren nach einem der vorhergehenden Ansprüche, **dadurch gekennzeichnet, dass** für das Erkennen der Komponententypen maschinelles Lernen eingesetzt wird.

6. Computerimplementiertes Verfahren nach einem der vorhergehenden Ansprüche, **dadurch gekennzeichnet, dass** für Systemkomponenten mindestens eine der folgenden Systemkomponenten eingesetzt wird: Transformator, Leitung, Schalteinrichtung, Schutzgerät, Netzregler.

7. Computerimplementiertes Verfahren nach einem der vorhergehenden Ansprüche, **dadurch gekennzeichnet, dass** die Komponenteneigenschaften anhand einer vorgegebenen Taxonomie und eines vorgegebenen Regelsatzes den erkannten Komponententypen zugeordnet werden.

8. Anordnung für eine Analyse von Netzwerkinformationen eines elektrischen Energieversorgungsnetzes (2,3,4,5,6,7), aufweisend:
eine Kommunikationseinrichtung (12), die zum Empfangen von serialisierten Netzwerkinformationen in einem ersten anwendungsspezifischen Datenformat ausgebildet ist, wobei die serialisierten Netzwerkinformationen Informationen über Systemkomponenten aufweisen,
**dadurch gekennzeichnet, dass**
eine Deserialisierungseinrichtung (19) für ein Deserialisieren der serialisierten Netzwerkinformationen ausgebildet ist, und dass
eine erste Zuordnungseinrichtung (20) für ein Zuordnen von Komponententypen anhand der Informationen über Systemkomponenten ausgebildet ist, und dass
eine zweite Zuordnungseinrichtung (21) für ein Zuordnen von Komponenteneigenschaften anhand der Informationen über Systemkomponenten ausgebildet ist, und dass
eine Topologieausgabeeinrichtung (22) für ein Bereitstellen einer Netzwerktopologie (23,58) ausgebildet ist, die als Graph Typen und Eigenschaften der Systemkomponenten beinhaltet, in einem zweiten anwendungsspezifischen Datenformat.

9. Anordnung nach Anspruch 8, **dadurch gekennzeichnet, dass** eine Netzleiteinrichtung ausgebildet ist, die Netzwerktopologie für eine Steuerung des elektrischen Energieversorgungsnetzes (2,3,4,5,6,7) zu verwenden.

10. Anordnung nach Anspruch 8 oder 9, **dadurch gekennzeichnet, dass**
die Deserialisierungseinrichtung ausgebildet ist, für das Deserialisieren ein regelbasiertes Verfahren einzusetzen, bei dem anhand der serialisierten Netzwerkinformationen Identifikationsspalten in Datentabellen erkannt werden, und anhand von Kennzeichnungen in den Identifikationsspalten die Systemkomponenten als miteinander verbunden erkannt werden.

11. Anordnung nach einem der Ansprüche 7 bis 10, **dadurch gekennzeichnet, dass**
die erste Zuordnungseinrichtung ausgebildet ist, für das Erkennen der Komponententypen ein regelbasiertes Verfahren einzusetzen.

12. Anordnung nach einem der Ansprüche 7 bis 11, **dadurch gekennzeichnet, dass**
die erste Zuordnungseinrichtung ausgebildet ist, für das Erkennen der Komponententypen maschinelles Lernen einzusetzen.

13. Anordnung nach einem der Ansprüche 7 bis 12, **dadurch gekennzeichnet, dass**
für Systemkomponenten mindestens eine der folgenden Systemkomponenten verwendet werden; Transformator, Leitung, Schalteinrichtung, Schutzgerät, Netzregler.

14. Anordnung nach einem der Ansprüche 7 bis 13, **dadurch gekennzeichnet, dass**
die zweite Zuordnungseinrichtung ausgebildet ist, die Komponenteneigenschaften anhand einer vorgegebenen Taxonomie und eines vorgegebenen Regelsatzes den erkannten Komponententypen zuzuordnen.

15. Computerprogrammprodukt, umfassend Befehle, die bei der Ausführung des Programms durch einen Computer diesen veranlassen, das Verfahren nach einem der Ansprüche 1 bis 7 auszuführen.
